# EUROPEAN PATENT SPECIFICATION

(11) **EP 1 308 007 B1**
(45) Date of publication and mention of the grant of the patent: **09.09.2009**
(21) Application number: 01971828.7
(22) Date of filing: 31.07.2001
(51) Int. Cl.: H04L 12/64

(54) **A METHOD AND DEVICE FOR TRANSMITTING SIGNALS**
VERFAHREN UND VORRICHTUNG ZUM ÜBERTRAGEN VON SIGNALEN
PROCEDE ET DISPOSITIF DE TRANSMISSION DE SIGNAUX

(30) Priority: 07.08.2000 EP 00116233
(43) Date of publication of application: 07.05.2003
(73) Proprietor: TELEFONAKTIEBOLAGET LM ERICSSON (publ), 164 83 Stockholm (SE)
(72) Inventor: SCHIEDER, Andreas, 52134 Herzogenrath (DE); KALDEN, Roger, 41460 Neuss (DE); MALM, Peter, S-22648 Lund (SE)
(74) Representative: HOFFMANN EITLE
(86) International application number: PCT/EP2001/008853
(87) International publication number: WO 2002/013471

(56) References cited:
- US-A- 5 757 801
- TRAN H ET AL: "RANDOM ACCESS WITH MIXED VOICE AND DATA WITH INTERPOLATION OF DATA IN SPEECH" PROCEEDINGS OF THE GLOBAL TELECOMMUNICATIONS CONFERENCE (GLOBECOM),US,NEW YORK, IEEE, vol. -, 29 November 1993 (1993-11-29), pages 113-117, XP000428416
- BOCCI P ET AL: "DYNAMIC DATA PACKET SIZING BASED ON REAL TIME MONITORING OF SYSTEM VOICE ACTIVITY" MOTOROLA TECHNICAL DEVELOPMENTS,US,MOTOROLA INC. SCHAUMBURG, ILLINOIS, vol. 31, 1 June 1997 (1997-06-01), page 172 XP000741064

## Description

### [Field of the Invention]

The present invention relates to a method and device for transmitting signals of a first category and signals of a second category over a link in a telecommunication system, where said link provides a predetermined signal transmission rate, and where the signals of the first category are associated with a real-time transmission and have a discontinuous characteristic according to which these signals of the first category comprise periods of activity and periods of inactivity. An example of such signals of the first category is speech, and an example of such signals of the second category is data.

### [Background of the Invention]

In modern communications systems, there exists the situation where it is desirable to transmit signals of two different categories over a link having a predetermined signal transmission rate, i.e. a dedicated or circuit-switched link, and where the first category is prioritized with respect to the second category. An example of this is the simultaneous or parallel transmission of speech and data over a dedicated link, e.g. in a mobile telephone that is capable of transmitting data together with speech, where speech basically has priority over the data transmission, and the data transmission is conducted at best effort. "Best effort" is a transmission category in which there are basically no minimum assurances of band-width, and the corresponding transmission is only conducted as best as possible.

The above situation will e.g. occur in a mobile station of a mobile communication system, where only one (physical) channel is available, this one channel e.g. being defined by one time-slot and providing a predetermined signal transmission rate, and where this channel should be primarily used for carrying speech information, but it is at the same time desired to transmit data in the background at best effort. This is the case in such mobile communications systems, in which it is desired to add data transmission capabilities to systems that were basically designed for speech communication, as this is presently the case for systems that develop the GSM system further in this respect, such as GERAN (GSM/EDGE Radio Access Network; EDGE = Enhanced Data rates for GSM Evolution).

In connection with speech transmissions, it is known that the periods of speech inactivity can be used advantageously, e.g. to reduce the sending power of a mobile device, in order to save energy. This is also known as discontinuous transmission (DTX). In connection with the simultaneous transmission of speech and data, it is therefore imaginable to define a first channel for carrying speech signals and a second channel for carrying data signals, where the first channel uses the transmission rate of the provided link during periods of speech activity, and the second channel uses the transmission rate during periods of speech inactivity.

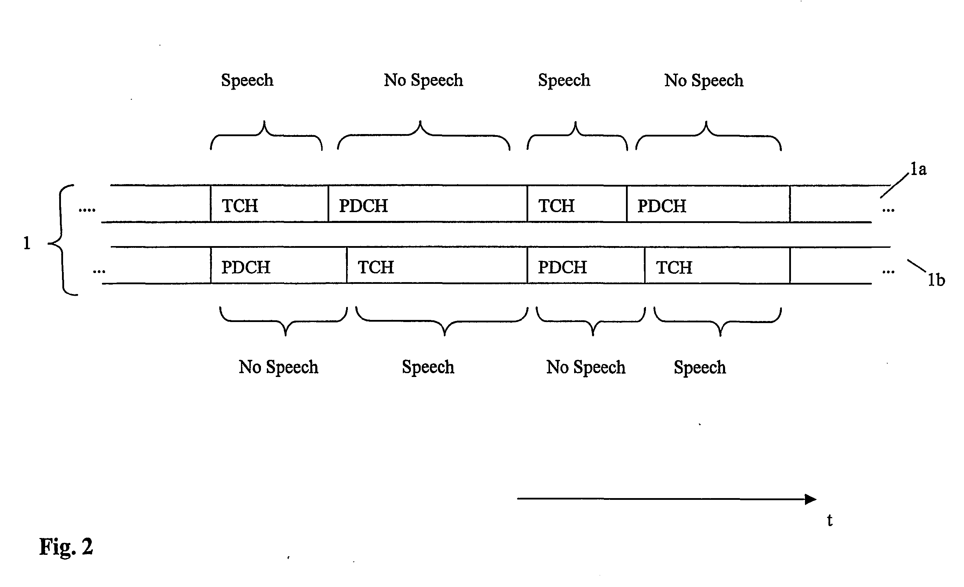

Although such a concept would have the advantage that the periods of speech inactivity are advantageously used to transmit data, there occurs a specific disadvantage when the data is transported under the control of a protocol that employs acknowledgment messages for acknowledging the correct receipt of data. The RLC (Radio Link Control) protocol is an example. This shall be explained in connection with Fig. 2.

Fig. 2 schematically shows a bi-directional link 1 that has an up-link direction la and a down-link direction 1b. These two link directions will typically show a series of speech activity periods and speech inactivity periods, where it may be remarked that these periods will usually alternate between the up-link and down-link directions, due to the nature of verbal exchange between two partners in a conversation. As indicated in Fig. 2, during periods of speech activity, a traffic channel (TCH) is assigned the data transmission rate of the link, in order to transmit speech. On the other hand, when there is no speech activity, then the given signal transmission rate of the link 1 is assigned to a packet data channel (PDCH), over which data packets are sent in one direction, and over which acknowledgment messages related to said data packets are sent in the other direction. The concept of ARQ (Automatic Retransmission reQuest) and acknowledgment messages is well known in the art and need not be explained further here.

Under the conditions shown in Fig. 2, the alternating nature of the channel occupation in the up-link and down-link directions can lead to severe stalling problems for data transmission, when sliding-window flow control is used. Sliding-window flow control is again well known in the art, and need not be explained in detail. In sliding-window flow control, the number of packets that is sent depends on the number of outstanding acknowledgments for packets previously sent. In the situation of Fig. 2, if in the direction in which data packets are being sent a period of speech inactivity is very long (which corresponds to a long period of speech activity in the other link direction), then, although data packets could be sent, the flow control will stall, as no acknowledgments can be sent.

As a consequence, the DTX concept leads to the disadvantageous situation that the data transmission in the periods of speech inactivity can become stalled, which means that the data transmission is inefficient and of lesser quality than could be obtained on the basis of the actual data transmission rate available during the periods of speech inactivity. In other words, this means that the available band-width during periods of speech inactivity is not efficiently used.

One possible solution to this problem could consist in stealing frames from the TCH for transporting acknowledgment messages. However, this does not lead to a satisfactory transmission, as the known speech codecs only allow a very low rate of stolen frames, because otherwise the speech quality is considerably degraded. As a consequence, stolen frames do not provide sufficient transmission capacity for sending acknowledgment messages.

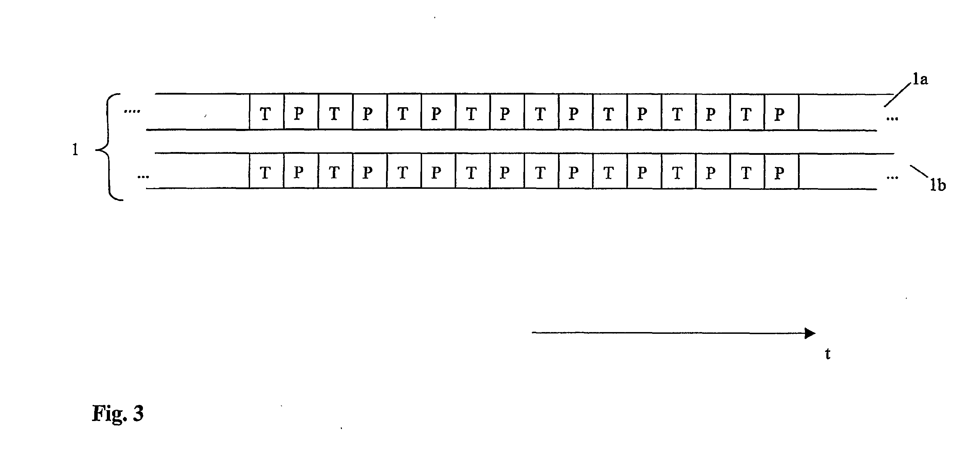

Another solution that may be envisaged is the introduction of a Dual Transfer Mode (DTM), in which the available signal transmission capacity is simply continuously assigned to both the first and second channel. This is schematically shown in Fig. 3. "T" represents the TCH and "P" represents the PDCH. In a TDMA example, as in GSM, where the physical link is provided by a time slot, the channel assignment shown in Fig. 3 could be realized by giving the even numbered time slots to TCH and the odd numbered time slots to PDCH. This in other words means that the traffic channel TCH would be reduced to half-rate (which will also be referred to as TCH/H), where the other half of the transmission rate is assigned to the PDCH.

Due to the constant provision of a certain amount of band-width for the PDCH in both directions, the stall conditions mentioned in connection with the DTX concept do not occur. On the other hand, similar to the situation for the DTX concept, there is a waste of transmission capacity during periods of speech inactivity, as a traffic channel for carrying speech is assigned that uses one half of the band-width, although there is no speech to be transmitted in these periods of inactivity.

As a consequence, both of the above-discussed concepts, namely DTX in connection with Fig. 2 and DTM in connection with Fig. 3, suffer from the disadvantage that the transmission during periods of speech inactivity becomes inefficient. It may be noted that this problem is not restricted to the above-described example of the simultaneous transmission of speech and data, but will occur in any system that desires to transmit a first and second category of signals over link having a predetermined transmission rate, where the first category has a discontinuous characteristic comprising periods of activity and periods of inactivity. Besides real-time speech information, this could e.g. also be real-time video information. Also, the signals of the second category do not have to be data as such, but could be any type of information that is suitable for best effort transmission at a lower priority than the first category of signals.

From US-5,757,801 a method of statistically multiplexing time-sensitive data (e.g. voice or fax communication) and non-time-sensitive data (e.g. asynchronous digital data) onto a common link is known. The time-sensitive data is treated as high-priority and the non-time-sensitive as low priority data. For the case of the time-sensitive data being voice information, it is described to provide a silence detection function, such that in periods of silence, low priority data may be transmitted. Furthermore, whenever higher priority data is ready for transmission, low priority data transmissions are interrupted. The system of US-5,757,801 therefore operates as explained in connection with Fig. 2.

### [Object of the Invention]

The object of the invention is to provide an improved method and device for transmitting signals of a first category and a second category over a link having a predetermined signal transmission rate, where the signals of the first category have a discontinuous characteristic, such that the above-described problems can be overcome and an efficient transmission can be obtained during periods of inactivity of the signals of the first category.

### [Summary of the Invention]

This object is solved by the method described in claim 1 and the communication device described in claim 11. Advantageous embodiments are described in the dependent claims.

In accordance with the present invention, a first proportion of the signal transmission rate provided by the link is assigned to the first channel and a second proportion is assigned to the second channel during periods of activity of the first category of signals. In other words, during such periods of activity of the signals of the first category, the transmission rate of the link is shared by the two channels. On the other hand, during periods of inactivity, the proportion assigned to the second channel (which carries signals of the second category) is increased with respect to the proportion assigned during periods of activity. Preferably, the second channel receives most or all of the transmission rate during periods of inactivity of the signals of the first category.

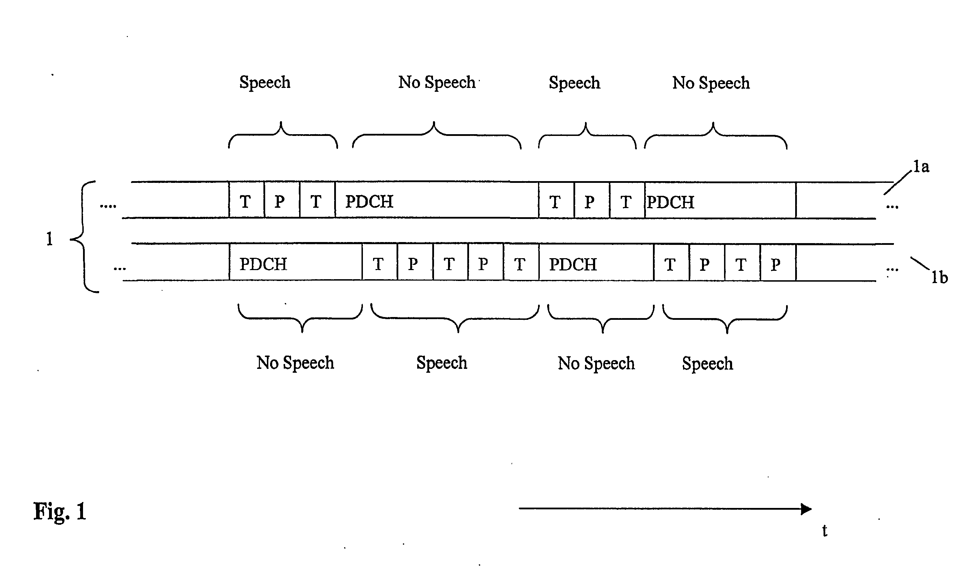

This is shown schematically in Fig. 1, which again shows a bi-directional link similar to Figs. 2 and 3. Also, it shows an example where the signals of the first category are speech signals. Also, Fig. 1 shows an example where the TCH and the PDCH share the predetermined transmission rate equally during periods of speech activity (i.e. TCH/H and PDCH at the same rate), and where the link transmission rate is fully allocated to the PDCH during periods of speech inactivity.

The concept of the present invention, when applied to the situation where packets of the second category are sent in the one link direction and feed-back packets (such as acknowledgment packets) are sent in the other link direction, as shown in the example Fig. 1, achieves the important advantage that the transmission during periods of inactivity of signals of the first category (speech signals in Fig. 1) becomes highly efficient with respect to the concepts described above in connection with Figs. 2 and 3. Namely, due to the fact that a channel for signals of the second category is provided during periods of activity of the signal of the first category, there is no stalling, because acknowledgment messages can always be sent. In other words, there is no waste of band-width during periods of signal inactivity of signals of the first category due to stalling. Moreover, the periods of inactivity of the signals of the first category are used more efficiently for the second channel in comparison to the example of Fig. 3 (DTM), as the channel assignment for the second channel (PDCH) is increased, and preferably increased to the highest amount possible.

This highest amount can be 100%, such that there is no signal transmission over the first channel (TCH) during periods of inactivity of the first signal. According to a preferred embodiment, in which the signals of the first category are real-time speech signals, the first channel is only used for a transmission of background noise during periods of speech inactivity, where the proportion of the signal transmission rate of the link used by the first channel for transmitting the background noise is lower than the proportion of the transmission rate assigned to the second channel during such periods of speech inactivity. Namely, although it will then not be possible to assign 100 % of the signal transmission capacity to the second channel during the periods of speech inactivity, as a small amount of transmission capacity is required for the transmission of background noise, nonetheless most of the signal transmission rate of the link (more than 90 %) can be assigned to the second channel.

It is possible that the assignment of the first and second channels is performed in principal during an associated mode, regardless of the demand for data transmission.

### [Brief description of figures]

The present invention shall be better understood from the following description of preferred embodiments, where said description refers to the accompanying figures, in which:
- Fig. 1: shows a schematic example of an embodiment of the present invention;
- Fig. 2: shows a schematic representation for describing the concept of discontinuous transmission (DTX);

- Fig. 3: shows a schematic representation for explaining the concept of dual transfer mode (DTM) ; and
- Fig. 4: shows a schematic block diagram for representing an embodiment of a communication device according to the present invention.

### [Detailed description]

In the following, examples of the present invention shall be explained in detail. The following examples presume that the signals of the first category are speech signals, and the signals of the second category are data signals. The speech signals are transported in frames, as this is well known e.g. from GSM. The data signals are present in the form of data packets arranged in accordance with any suitable data transmission protocol, such as RLP or TCP, this transmission lying at a higher layer than the physical layer that handles the channel assignment for the first and second channels.

Although this is a preferred embodiment, the present invention is by no means restricted thereto, as the signals of the first category could e.g. also be real-time video signals, or any other type of signal having a discontinuous characteristic according to which periods of activity and periods of inactivity occur. Also, the signals of the second category can be any type of signal that should be transmitted at best effort parallel to the signals of the first category.

Furthermore, the following examples shall relate to mobile communication systems, as the field of mobile communications is a preferred application of the present invention. Namely, the more efficient use of band-width resources is of special importance in mobile communication systems, because band-width is a scarce resource in such systems. However, the present invention is by no means restricted thereto, as it in principle can be applied to any communication system in which signals of a first category and second category as defined in the claims are to be transmitted over a link of given transmission capacity.

Furthermore, the following examples shall assume that the link is physically defined by way of a time-slot in a TDMA scheme, such that said time-slot also determines the link transmission rate. However, it is clear that the link can be provided in any suitable way, namely also by a frequency (FDMA), or a code (CDMA), or by any suitable combination of such multiple access concepts.

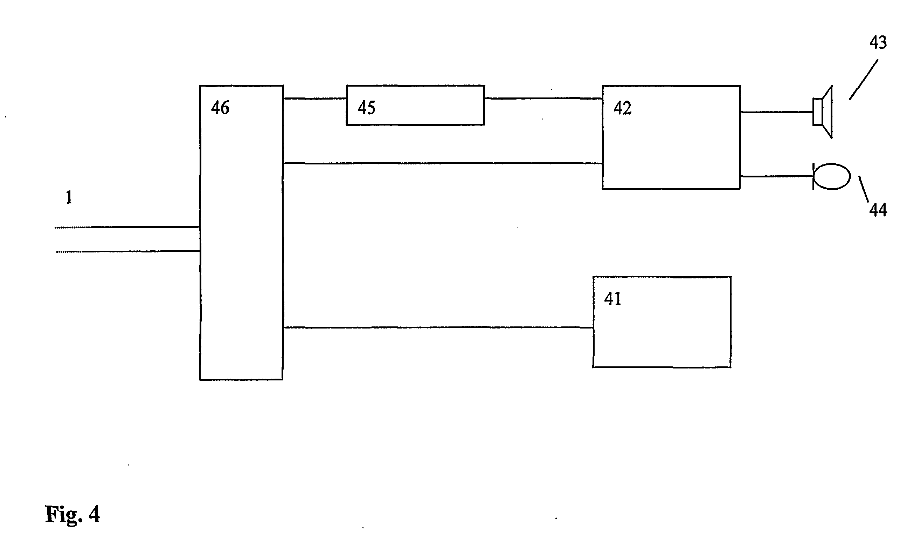

Fig. 4 shows a schematic block diagram of a communication device according to the present invention, which here is a terminal station of a mobile communication system. Naturally, the present invention can also be implemented in any node of a communication system. The communication device comprises a data source 41, which can e.g. be some sort of data processing application, and it also comprises the basic telephone features of a speech control section 42, which especially contains a codec for coding and decoding speech, where said speech control section 42 is coupled to a microphone 44 and a loudspeaker 43. It may be remarked that other conventional features of a telephone system, such as a keyboard, a display, etc. are not shown in Fig. 4 for the purpose of simplicity.

The communication device figure 4 furthermore comprises a speech discriminator 45, which is adapted to discriminate between periods of speech activity and periods of speech inactivity ("silent" periods, in which the signal from the microphone 44 only contains background noise). The discriminator 45 can operate according to any known principle of speech discrimination as used in the known DTX systems. For example, a combination of threshold comparisons and spectral domain techniques can be employed. As this is well known in the art, it needs not be described further here.

The communication device of Fig. 4 also comprises a channel management part 46 that is arranged to on the one hand establish channels for transmitting speech signals coming from the speech control section 42 and on the other hand for transmitting data signals coming from the data source 41, over the common link 1, which is a bi-directional link as shown in Fig. 1.

It may be noted that the channel management part will on the one hand establish the channels, and on the other hand perform the assignment of transmission rate to established channels. In other words, if a channel is not established, then no assignment can take place. The present invention is preferably implemented in such a way that once an appropriate operation mode is entered, e.g. as selected by the user, the channel management part will establish the first and second channel. When this mode is terminated, then the channels as defined in accordance with the invention are also terminated.

According to a first embodiment, the communication device of Fig. 4 is operated in such a way that the assignment of transmission rate provided for the link 1 is conducted as exemplified in Fig. 1. Namely, the channel management part 46 and the node at the other end of link 1 (e.g. a base station sub-system BSS in the case of a GSM communication system) are controlled such that during periods of speech activity detected by discriminator 45, the transmission capacity of link 1 is assigned to both the traffic channel TCH for carrying speech signals and the packet data channel PDCH for carrying data signals. It may be noted that although Fig. 1 only shows two channels, the present invention is also applicable to more than two channels.

On the other hand, during periods of speech inactivity, the proportion of transmission rate assigned to the data transmission channel PDCH is increased with respect to the proportion during speech periods. In the example of Fig.1, the entire transmission rate is assigned to the data transmission channel PDCH. In this case there would be no transmission of background noise during the periods of speech inactivity. In this case it is e.g. possible that the two terminal stations involved in the communication are arranged to create comfort noise during these periods of speech inactivity. It is, however, also possible to arrange the channel assignment during periods of speech inactivity in such a way that a large portion of the transmission rate is used by the data transmission channel PDCH, and only a small part is used by the TCH for transmitting background noise (e.g. > 90 % to the PDCH and < 10 % to the TCH).

It is in principle possible that the assignment of data transmission rate to the speech channel TCH and the data channel PDCH is variable during the periods of speech activity. This depends on the specific requirements of the individual system, and can e.g. also depend on factors such as supplementary channels (i.e. the case where more than the two channels TCH and PDCH are provided), etc. It is, however, preferable that the assignment during periods of speech activity is in a fixed proportion, e.g. 1/4 to the data channel PDCH and 3/4 to the traffic channel TCH. Such a fixed proportionality has the advantage of easier maintenance. More preferably, the two channels share the data transmission rate at 1/2 each. In other words, in the context of a GSM system, the traffic channel becomes a half-rate traffic channel TCH/H as is already well known for GSM half-rate systems, and the other half of the transmission rate provided by the link is assigned to the packet data channel PDCH. In other words, the TCH/H corresponds to a half-assigned time-slot, where every second burst is assigned, while the PDCH is equally a half-assigned time-slot in which every other second burst is assigned. On the other hand, during periods of speech inactivity, if the whole transmission rate is assigned to the PDCH, during these periods the PDCH is assigned every burst to thereby fully use the time-slot.

It may be noted that typically the channel management part 46 will instruct the codec in speech control section 42 to switch to lower rate coding (e.g. half-rate coding) of speech if the concept of Fig. 1 is used.

According to the presently described first embodiment, the channel assignment during periods of speech activity is performed regardless of the presence or absence of data packets to be transmitted. The advantage is the simplicity of the control scheme. Namely, if the communication device is operated to enter a mode in which the concept of the present invention is applied, then the channel assignment as indicated in Fig. 1 is automatically activated.

In summary, the available transmission rate of the link is shared between the speech channel or traffic channel TCH and the packet data channel PDCH during periods of speech activity, and the proportion of data transmission rate assigned to the PDCH is increased during periods of speech inactivity. As already specified earlier, this concept is especially advantageous in connection with bi-directional links, in which the data signals carried by the PDCH are in the one link direction data packets, and in the other link direction feed-back packets related to the received data packets, e.g. acknowledgment messages in the context of an ARQ scheme. There are numerous protocols that make use of feed-back packets for controlling the flow of data packets, such as RLC (Radio Link Control) or also TCP (Transmission Control Protocol). Both the RLC protocol and the TCP protocol are well known in the art and well described in corresponding specifications, such that a further description is not necessary here.

It may be noted that it is of no importance how the protocol using feed-back packets is implemented or arranged, e.g. if the acknowledgment packets are sent automatically or if they are only sent in response to a polling message from the data packet sender.

In any case, in accordance with the present invention, there is always a packet data channel PDCH present, even in periods of speech activity, such that feed-back packets can always be sent, such that no stalling will occur, so that the periods of speech inactivity can be efficiently used. In other words, the present invention provides an effect not providable by the system described in connection with Fig. 2. Also, the present invention provides an effect not attainable by the system of Fig. 3, because in Fig. 3 there is a waste of transmission capacity for the traffic channel in those periods, in which there is no speech. Therefore, in summary, the system of the present invention achieves the effect not achievable by either the system of Fig. 2 or of Fig. 3.

The identification of the assigned channel type by the receiving end of link 1 can be done in any desired or suitable way, e.g. by means of appropriate headers in frames. In accordance with a preferred example of the present invention, which relates to a GSM based system that additionally employs the definitions of GPRS (General Packet Radio Service) for data transport, the so-called stealing bits of the physical layer frame are used for identifying the assigned channel. This can be used in the up-link as well as the down-link direction. The stealing bits are starting bits provided by a burst that are not coded together with the payload. For example, the first two bits are not coded with the payload. Over the course of several bursts such stealing bits code information about the content of these bursts. For example, in GPRS four bursts form one radio block, such that eight stealing bits are available for indicating which coding for the payload has been used.

An example of how the two channels and the corresponding data transmission rate can be assigned will now be described. The transmitter is arranged such that each link direction transports a series of frames, where RLC PDUs (PDU = Protocol Data Unit) and voice frames alternate. The RLC PDUs carry data. The voice frames carry speech during periods of speech activity, and carry data during periods of speech inactivity, to thereby achieve the concept shown in Fig. 1. In other words, the channel management part simply places data into the voice frames during periods of speech inactivity, and changes the stolen bit(s) in the voice frame, such that the receiver will correctly identify the frame as carrying data.

In such a combined GSM/GPRS system, the traffic channel TCH will not only carry the speech signals, but also the other known associated virtual channels for transporting control information, such as the FACCH (Fast Associated Control Channel), the SACCH (Slow Associated Control Channel), etc. and the data packet channel PDCH will also carry the known associated GPRS virtual channels, such as the PACCH (Packet Associated Control Channel).

With respect to the above-mentioned preferred example of a GSM/GPRS system, it may be noted that although GPRS is oriented towards packet-switching (i.e. connectionless), the situation underlying the present invention is such that a link with a predetermined data transmission rate is present, i.e. a dedicated circuit-switched link. For this reason, even if data is being sent in accordance with protocols and standards established in connection with GPRS, then specific simplifications can be employed. Namely, in GPRS a so-called temporary block flow (TBF) is assigned every time that data is to be sent. This is due to the connectionless concept underlying GPRS. The TBF includes assigned resources (such as a time-slot) as well as established RLC entities. Due to the fact that in the situation underlying the present invention the data is being sent over a circuit-switched link, it is not necessary to generate a TBF for every data transmission. Much rather, it is sufficient to establish a virtual TBF (which could also be referred to as a "permanent" TBF) when the combined channel consisting of a TCH and a PDCH is established, and this virtual TBF shall only be terminated when the combined channel is released, namely when the communication switches to a mode in which the concept of the present invention is not used.

Although the present application has been described in the context of specific examples, these examples are only intended to provide the skilled person with a better understanding and are not intended to restrict the scope of the invention. The scope of the invention is much rather defined by the appended claims. Also, reference signs in the claims only serve the purpose of better understanding and do not restrict the scope.

## Claims

1. A method of transmitting signals of a first category and signals of a second category over a link (1) in a telecommunication system, said link providing a predetermined signal transmission rate, where said signals of the first category are associated with a real-time transmission and have a discontinuous characteristic according to which said signals of said first category comprise periods of activity and periods of inactivity, said method comprising:
providing a first channel (TCH) for carrying signals of said first category and providing a second channel (PDCH) for carrying signals of said second category,
assigning a first portion of said predetermined signal transmission rate to said first channel (TCH) and a second portion of said predetermined signal transmission rate to said second channel (PDCH) during periods of activity of said signals of said first category, such that even in periods of activity of said signals of said first category, there is always a second channel (PDCH) present, and
during periods of inactivity of said signals of said first category, increasing said portion of said predetermined signal transmission rate assigned to said second channel (PDCH) during periods of activity of said signals of said first category.

2. The method of claim 1, wherein during periods of activity of said signals of said first category the first and second channel each use a fixed portion of the predetermined signal transmission rate.

3. The method of claim 2, wherein during periods of activity of said signals of said first category the first and second channel each use a one half of the predetermined signal transmission rate.

4. The method of one of claims 1 to 3, wherein said signals of said first category are real-time speech signals.

5. The method of claim 4, wherein during periods of speech inactivity said first channel is only used for a transmission of background noise, where the portion of said predetermined signal transmission rate used by said first channel for transmitting background noise during periods of speech inactivity is lower than the portion of said predetermined signal transmission rate used by said second channel.

6. The method of one of claims 1 to 3, wherein said signals of said first category are real-time video signals.

7. The method of one of claims 1 to 6, wherein said signals of said second category are non-real-time data packets sent from a first end of said link to a second end, and acknowledgment packets for acknowledging the correct receipt of a data packet, said acknowledgment packets being sent from said second end to said first end.

8. The method of one of claims 1 to 7, wherein said link is established between a terminal station and a node of said telecommunication system.

9. The method of claim 8, wherein said telecommunication system is a mobile communication system and said terminal station is a mobile station.

10. The method of claim 1, wherein said link is a bi-directional link having a first direction and a second direction, said signals of said second category consist of data packets to be sent in the first direction and acknowledgment packets to be sent in the second direction, and said first and second channels are provided at least in said second direction.

11. A communication device, said communication device being operable to transmit signals of a first category and signals of a second category over a link in a telecommunication system, said link providing a predetermined signal transmission rate, where said signals of the first category are associated with a real-time transmission and have a discontinuous characteristic according to which said signals of said first category comprise periods of activity and periods of inactivity, said communication device comprising:
a channel establishment part (46) arranged to provide a first channel (TCH) for carrying signals of said first category and a second channel (PDCH) for carrying signals of said second category,
a discriminator (45) for discriminating between periods of activity and periods of inactivity of said signals of said first category, and
a channel management part (46) arranged to communicate with said discriminator, said channel management part being operable to assign a first portion of said predetermined signal transmission rate to said first channel (TCH) and a second portion of said predetermined signal transmission rate to said second channel (PDCH) during periods of activity of said signals of said first category indicated by said speech discriminator, such that even in periods of activity of said signals of said first category, there is always a second channel (PDCH) present, and during periods of inactivity of said signals of said first category indicated by said speech discriminator, to increase said portion of said predetermined signal transmission rate assigned to said second channel (PDCH) during periods of activity of said signals of said first category.

12. The communication device of claim 11, wherein said channel management part is arranged such that during periods of activity of said signals of said first category the first and second channel each use a fixed portion of the predetermined signal transmission rate.

13. The communication device of claim 12, wherein said channel management part is arranged such that during periods of activity of said signals of said first category the first and second channel each use one half of the predetermined signal transmission rate.

14. The communication device of one of claims 11 to 13, wherein said signals of said first category are real-time speech signals.

15. The communication device of claim 14, wherein said channel management part is arranged such that during periods of speech inactivity said first channel is only used for a transmission of background noise, where the portion of said predetermined signal transmission rate assigned to said first channel for transmitting background noise during periods of speech inactivity is lower than the portion of said predetermined signal transmission rate assigned to said second channel.

16. The communication device of one of claims 11 to 13, wherein said signals of said first category are real-time video signals.

17. The communication device of one of claims 11 to 16, wherein said signals of said second category are non-real-time data packets sent by said communication device over said link, or acknowledgment packets for acknowledging the correct receipt of a data packet received by said communication device over said link.

18. The communication device of one of claims 11 to 17, wherein said communication device is a terminal station of said telecommunication system.

19. The communication device of claim 18, wherein said telecommunication system is a mobile communication system and said terminal station is a mobile station.

## Patentansprüche

1. Verfahren eines Übertragens von Signalen einer ersten Kategorie und Signalen einer zweiten Kategorie über eine Verbindung (1) in einem Telekommunikationssystem, wobei die Verbindung eine vorbestimmte Signalübertragungsrate bereitstellt, wobei die Signale der ersten Kategorie mit einer Echtzeitübertragung verknüpft sind und eine diskontinuierliche Eigenschaft aufweisen, gemäß der die Signale der ersten Kategorie Aktivitätszeiträume und Inaktivitätszeiträume umfassen, wobei das Verfahren umfasst:
Bereitstellen eines ersten Kanals (TCH) zum Tragen von Signalen der ersten Kategorie und Bereitstellen eines zweiten Kanals (PDCH) zum Tragen von Signalen der zweiten Kategorie,
Zuordnen eines ersten Teils der vorbestimmten Signalübertragungsrate zu dem ersten Kanal (TCH) und eines zweiten Teils der vorbestimmten Signalübertragungsrate zu einem zweiten Kanal (PDCH) während Aktivitätszeiträumen der Signale der ersten Kategorie derart, dass sogar in Aktivitätszeiträumen der Signale der ersten Kategorie immer ein zweiter Kanal (PDCH) vorliegt, und
während Inaktivitätszeiträumen der Signale der ersten Kategorie, Erhöhen des Teils der vorbestimmten Signalübertragungsrate, die dem zweiten Kanal (PDCH) während Aktivitätszeiträumen der Signale der ersten Kategorie zugeordnet ist.

2. Verfahren nach Anspruch 1, wobei während Aktivitätszeiträumen der Signale der ersten Kategorie der erste und zweite Kanal jeweils einen festen Teil der vorbestimmten Signalübertragungsrate verwenden.

3. Verfahren nach Anspruch 2, wobei während Aktivitätszeiträumen der Signale der ersten Kategorie der erste und zweite Kanal jeweils eine Hälfte der vorbestimmten Signalübertragungsrate verwenden.

4. Verfahren nach einem der Ansprüche 1 bis 3, wobei die Signale der ersten Kategorie Echtzeit-Sprachsignale sind.

5. Verfahren nach Anspruch 4, wobei während Sprach-Inaktivitätszeiträumen der erste Kanal lediglich für eine Übertragung von Hintergrundrauschen verwendet wird, wobei der Teil der vorbestimmten Signalübertragungsrate, die von dem ersten Kanal zum Übertragen von Hintergrundrauschen während Sprach-Inaktivitätszeiträumen verwendet wird, niedriger als der Teil der vorbestimmten Signalübertragungsrate ist, die von dem zweiten Kanal verwendet wird.

6. Verfahren nach einem der Ansprüche 1 bis 3, wobei die Signale der ersten Kategorie Echtzeit-Videosignale sind.

7. Verfahren nach einem der Ansprüche 1 bis 6, wobei die Signale der zweiten Kategorie Nicht-Echtzeit-Datenpakete, die von einem ersten Ende der Verbindung an ein zweites Ende gesendet werden und Bestätigungspakete zum Bestätigen des korrekten Empfangs eines Datenpaketes sind, wobei die Bestätigungspakete von dem zweiten Ende an das erste Ende gesendet werden.

8. Verfahren nach einem der Ansprüche 1 bis 7, wobei die Verbindung zwischen einer Terminalstation und einem Knoten des Telekommunikationssystems hergestellt wird.

9. Verfahren nach Anspruch 8, wobei das Telekommunikationssystem ein Mobilkommunikationssystem ist und die Terminalstation eine Mobilstation ist.

10. Verfahren nach Anspruch 1, wobei die Verbindung eine bidirektionale Verbindung mit einer ersten Richtung und einer zweiten Richtung ist, wobei die Signale der zweiten Kategorie aus Datenpaketen, die in der ersten Richtung gesendet werden sollen und Bestätigungspaketen bestehen, die in der zweiten Richtung gesendet werden sollen und der erste und zweite Kanal zumindest in der zweiten Richtung bereitgestellt werden.

11. Kommunikationsgerät, wobei das Kommunikationsgerät betriebsfähig ist, Signale einer ersten Kategorie und Signale einer zweiten Kategorie über eine Verbindung in einem Telekommunikationssystem zu senden, wobei die Verbindung eine vorbestimmte Signalübertragungsrate bereitstellt, wobei die Signale der ersten Kategorie mit einer Echtzeitübertragung verknüpft sind und eine diskontinuierliche Eigenschaft aufweisen, gemäß der die Signale der ersten Kategorie Aktivitätszeiträume und Inaktivitätszeiträume umfassen, wobei das Kommunikationsgerät umfasst:
einen Kanalherstellungsteil (46), der angeordnet ist, einen ersten Kanal (TCH) zum Tragen von Signalen der ersten Kategorie und einen zweiten Kanal (PDCH) zum Tragen von Signalen der zweiten Kategorie bereitzustellen,
einen Diskriminator (45) zum Unterscheiden zwischen Aktivitätszeiträumen und Inaktivitätszeiträumen der Signale der ersten Kategorie, und
einen Kanalverwaltungsteil (46), der angeordnet ist, mit dem Diskriminator zu kommunizieren, wobei der Kanalverwaltungsteil betriebsfähig ist, einen ersten Teil der vorbestimmten Signalübertragungsrate zu dem ersten Kanal (TCH) und einen zweiten Teil der vorbestimmten Übertragungsrate zu einem zweiten Kanal (PDCH) während Aktivitätszeiträumen der Signale der ersten Kategorie derart zuzuordnen, die durch den Sprachdiskriminator angezeigt werden, dass sogar in Aktivitätszeiträumen der Signale der ersten Kategorie immer ein zweiter Kanal (PDCH) vorliegt und während Inaktivitätszeiträumen der Signale der ersten Kategorie, die von dem Sprachdiskriminator angezeigt werden, den Teil der vorbestimmten Signalübertragungsrate zu erhöhen, die zu dem zweiten Kanal (PDCH) während Aktivitätszeiträumen der Signale der ersten Kategorie zugeordnet ist.

12. Kommunikationsgerät nach Anspruch 11, wobei der Kanalverwaltungsteil derart angeordnet ist, dass während Aktivitätszeiträumen der Signale der ersten Kategorie der erste und zweite Kanal jeweils einen festen Teil der vorbestimmten Signalübertragungsrate verwenden.

13. Kommunikationsgerät nach Anspruch 12, wobei der Kanalverwaltungsteil derart angeordnet ist, dass während Aktivitätszeiträumen der Signale der ersten Kategorie der erste und zweite Kanal jeweils eine Hälfte der vorbestimmten Signalübertragungsrate verwenden.

14. Kommunikationsgerät nach einem der Ansprüche 11 bis 13, wobei die Signale der ersten Kategorie Echtzeit-Sprachsignale sind.

15. Kommunikationsgerät nach Anspruch 14, wobei der Kanalverwaltungsteil derart angeordnet ist, dass während Sprach-Inaktivitätszeiträumen der erste Kanal lediglich zu einer Übertragung von Hintergrundrauschen verwendet wird, wobei der Teil der vorbestimmten Übertragungsrate, der zu dem ersten Kanal zum Übertragen von Hintergrundrauschen während Sprach-Inaktivitätszeiträumen zugeordnet ist, niedriger als der Teil der Signalübertragungsrate ist, die zu dem zweiten Kanal zugeordnet ist.

16. Kommunikationsgerät nach einem der Ansprüche 11 bis 13, wobei die Signale der ersten Kategorie Echtzeit-Videosignale sind.

17. Kommunikationsgerät nach einem der Ansprüche 11 bis 16, wobei die Signale der zweiten Kategorie Nicht-Echtzeit-Datenpakete, die von dem Kommunikationsgerät über die Verbindung gesendet werden oder Bestätigungspakete zum Bestätigen des korrekten Empfangs eines Datenpakets sind, das von dem Kommunikationsgerät über die Verbindung empfangen wird.

18. Kommunikationsgerät nach einem der Ansprüche 11 bis 17, wobei das Kommunikationsgerät eine Terminalstation des Telekommunikationssystems ist.

19. Kommunikationsgerät nach Anspruch 18, wobei das Telekommunikationssystem ein Mobilkommunikationssystem ist und die Terminalstation eine Mobilstation ist.

## Revendications

1. Procédé d'émission de signaux d'une première catégorie et de signaux d'une seconde catégorie sur une liaison (1) d'un système de télécommunications, ladite liaison fournissant un débit prédéterminé d'émission de signaux, dans lequel lesdits signaux de la première catégorie sont associés à une émission en temps réel et possèdent une caractéristique discontinue, selon laquelle lesdits signaux de ladite première catégorie comprennent des périodes d'activité et des périodes d'inactivité, ledit procédé comprenant les étapes consistant à :
fournir un premier canal (TCH) destiné à transporter des signaux de ladite première catégorie et fournir un second canal (PDCH) destiné à transporter des signaux de ladite seconde catégorie ;
attribuer une première portion dudit débit prédéterminé d'émission de signaux audit premier canal (TCH) et une seconde portion dudit débit prédéterminé d'émission de signaux audit second canal (PDCH) pendant des périodes d'activité desdits signaux de ladite première catégorie, si bien que, même dans les périodes d'activité desdits signaux de ladite première catégorie, un second canal (PDCH) est toujours présent ; et
pendant des périodes d'inactivité desdits signaux de ladite première catégorie, augmenter ladite portion dudit débit prédéterminé d'émission de signaux attribuée audit second canal (PDCH) par rapport aux périodes d'activité desdits signaux de ladite première catégorie.

2. Procédé selon la revendication 1, dans lequel, pendant des périodes d'activité desdits signaux de ladite première catégorie, les premier et second canaux utilisent chacun une portion fixe du débit prédéterminé d'émission de signaux.

3. Procédé selon la revendication 2, dans lequel, pendant des périodes d'activités desdits signaux de ladite première catégorie, les premier et second canaux utilisent chacun une moitié du débit prédéterminé d'émission de signaux.

4. Procédé selon l'une des revendications 1 à 3, dans lequel lesdits signaux de ladite première catégorie sont des signaux de parole en temps réel.

5. Procédé selon la revendication 4, dans lequel, pendant des périodes d'inactivité de la parole, ledit premier canal est uniquement utilisé pour l'émission d'un bruit de fond, si bien que la portion dudit débit prédéterminé d'émission de signaux utilisée par ledit premier canal pour l'émission du bruit de fond pendant les périodes d'inactivité de la parole est inférieure à la partie dudit débit prédéterminé d'émission de signaux utilisée par ledit second canal.

6. Procédé selon l'une des revendications 1 à 3, dans lequel lesdits signaux de ladite première catégorie sont des signaux vidéo en temps réel.

7. Procédé selon l'une des revendications 1 à 6, dans lequel lesdits signaux de ladite seconde catégorie sont des paquets de données en temps non réel, qui sont envoyés entre une première extrémité de ladite liaison et une seconde extrémité, ainsi que des paquets d'accusé de réception, destinés à accuser bonne réception d'un paquet de données, lesdits paquets d'accusé de réception étant envoyés entre ladite seconde extrémité et ladite première extrémité.

8. Procédé selon l'une des revendications 1 à 7, dans lequel ladite liaison est établie entre une station terminale et un noeud dudit système de télécommunications.

9. Procédé selon la revendication 8, dans lequel ledit système de télécommunications est un système de communication mobile et ladite station terminale est une station mobile.

10. Procédé selon la revendication 1, dans lequel ladite liaison est une liaison bidirectionnelle ayant une première direction et une seconde direction, lesdits signaux de ladite seconde catégorie étant constitués de paquets de données à envoyer dans la première direction et de paquets d'accusé de réception à envoyer dans la seconde direction et lesdits premier et second canaux étant fournis au moins dans ladite seconde direction.

11. Dispositif de communication, ledit dispositif de communication étant en mesure d'émettre des signaux d'une première catégorie et des signaux d'une seconde catégorie sur une liaison d'un système de télécommunications, ladite liaison fournissant un débit prédéterminé d'émission de signaux, dans lequel lesdits signaux de la première catégorie sont associés à une émission en temps réel et possèdent une caractéristique discontinue, selon laquelle lesdits signaux de ladite première catégorie comprennent des périodes d'activité et des périodes d'inactivité, ledit dispositif de communication comprenant :
une partie d'établissement de canaux (46), conçue pour fournir un premier canal (TCH) destiné à transporter des signaux de ladite première catégorie et à fournir un second canal (PDCH) destiné à transporter des signaux de ladite seconde catégorie ;
un discriminateur (45) destiné à discriminer les périodes d'activité et les périodes d'inactivité desdits signaux de ladite première catégorie ; et
une partie de gestion des canaux (46), conçue pour communiquer avec ledit discriminateur, ladite partie de gestion des canaux étant en mesure d'attribuer une première portion dudit débit prédéterminé d'émission de signaux audit premier canal (TCH) et une seconde portion dudit débit prédéterminé d'émission de signaux audit second canal (PDCH) pendant des périodes d'activité desdits signaux de ladite première catégorie indiquées par ledit discriminateur de parole, si bien que, même dans les périodes d'activité desdits signaux de ladite première catégorie, un second canal (PDCH) est toujours présent et, pendant des périodes d'inactivité desdits signaux de ladite première catégorie indiquées par ledit discriminateur de parole, d'augmenter ladite portion dudit débit prédéterminé d'émission de signaux attribuée audit second canal (PDCH) par rapport aux périodes d'activité desdits signaux de ladite première catégorie.

12. Dispositif de communication selon la revendication 11, dans lequel ladite partie de gestion des canaux est conçue afin que, pendant des périodes d'activité desdits signaux de ladite première catégorie, les premier et second canaux utilisent chacun une portion fixe du débit prédéterminé d'émission de signaux.

13. Dispositif de communication selon la revendication 12, dans lequel ladite partie de gestion des canaux est conçue afin que, pendant des périodes d'activité desdits signaux de ladite première catégorie, les premier et second canaux utilisent chacun une moitié du débit prédéterminé d'émission de signaux.

14. Dispositif de communication selon l'une des revendications 11 à 13, dans lequel lesdits signaux de ladite première catégorie sont des signaux de parole en temps réel.

15. Dispositif de communication selon la revendication 14, dans lequel ladite partie de gestion des canaux est conçue de manière à ce que, pendant les périodes d'inactivité de la parole, ledit premier canal est uniquement utilisé pour l'émission d'un bruit de fond, si bien que la portion dudit débit prédéterminé d'émission de signaux attribuée audit premier canal pour l'émission du bruit de fond pendant les périodes d'inactivité de la parole est inférieure à la portion dudit débit prédéterminé d'émission de signaux attribuée audit second canal.

16. Dispositif de communication selon l'une des revendications 11 à 13, dans lequel lesdits signaux de ladite première catégorie sont des signaux vidéo en temps réel.

17. Dispositif de communication selon l'une des revendications 11 à 16, dans lequel lesdits signaux de ladite seconde catégorie sont des paquets de données en temps non réel envoyés par ledit dispositif de communication sur ladite liaison ou des paquets d'accusé de réception, destinés à accuser bonne réception d'un paquet de données reçu par ledit dispositif de communication sur ladite liaison.

18. Dispositif de communication selon l'une des revendications 11 à 17, dans lequel ledit dispositif de communication est une station terminale dudit système de télécommunications.

19. Dispositif de communication selon la revendication 18, dans lequel ledit système de télécommunications est un système de communication mobile et ladite station terminale est une station mobile.
